# EUROPEAN PATENT APPLICATION

(11) **EP 4 819 048 A1**
(43) Date of publication of application: **07.10.2026**
(21) Application number: 25168241.5
(22) Date of filing: 03.04.2025
(51) Int. Cl.: G06T 7/73, G06T 7/80

(54) **CALIBRATION OF MULTI-CAMERA SYSTEM**

(71) Applicant: Koninklijke Philips N.V., 5656 AE Eindhoven (NL)
(72) Inventor: VAREKAMP, Christiaan, 5656 AG Eindhoven (NL); VAN GEEST, Bartholomeus Wilhelmus Damianus, 5656 AG Eindhoven (NL)
(74) Representative: Philips Intellectual Property & Standards

(57) **Abstract**

A method and system for calibration of a multi-camera system. Sets of 2D image frames of a scene are obtained, each set having been acquired by the multi-camera system at a different moment in time, and a feature detection and matching process is performed on each set of 2D image frames to identify a respective set of matched features. A pose is determined for each camera in the multi-camera system using the matched features in each set.

## Description

### FIELD OF THE INVENTION

The invention relates to the field of multi-camera systems.

### BACKGROUND OF THE INVENTION

Multi-camera systems are used to image a scene from multiple viewpoints, allowing 3D reconstruction of the scene (for instance, for the purpose of volumetric video). For accurate 3D reconstruction of a scene, it is important that the relative positions and orientations (i.e. the poses) of the cameras are known with a high degree of accuracy.

Structure from Motion algorithms can be used to determine camera poses from a set of images acquired by the camera. Structure from Motion algorithms use corresponding features across the set of images to determine both the 3D positions of features and the camera poses up to a scale factor. Corresponding features may be detected and matched using a scale-invariant feature transform (SIFT) algorithm and a suitable matcher.

Structure from Motion algorithms provide good results when the set of images used include features that are close to the cameras. However, if the set of images includes only distant features, the determination of the camera poses is less reliable. This can result in errors in reconstructing a dynamic scene if the unreliable camera calibration is used to estimate the position of objects in another set of images that includes closer features.

### SUMMARY OF THE INVENTION

The invention is defined by the claims.

According to examples in accordance with an aspect of the invention, there is provided a method for calibration of a multi-camera system comprising a plurality of cameras, the method comprising: obtaining a first set of 2D image frames of a scene, each 2D image frame in the first set having been acquired by a respective camera in the multi-camera system at a first moment in time; performing a first feature detection and matching process on the first set of 2D image frames to identify a first set of matched features; obtaining a second set of 2D image frames of the scene, each 2D image frame in the second set having been acquired by a respective camera in the multi-camera system at a second, different moment in time; performing a second feature detection and matching process on at least a subset of the second set of 2D image frames to identify a second set of matched features; and processing the first set of matched features and the second set of matched features to determine a pose for each camera in the multi-camera system.

In this way, features are accumulated over time, increasing a likelihood that the matched features used to determine the pose (relative position and orientation) of each camera include features close to the camera, and thus increasing an accuracy and reliability of the camera calibration.

In some examples, the second set of 2D image frames is a set of 2D image frames for which one or more objects detected in at least two image frames in the set satisfy one or more first predetermined conditions.

In this way, computational resources are not wasted by processing a set of image frames that would provide little or no improvement compared with using only features in the first set of 2D image frames. The one or more first predetermined conditions may, for example, relate to position, known size and/or a size within the 2D image frame (e.g. a size of a bounding box for the object).

In some examples, the second feature detection and matching process is performed only on 2D image frames in the second set for which one or more objects detected in the 2D image frame satisfy the one or more first predetermined conditions.

In this way, computational resources are not wasted by performing feature detection and matching on image frames that would provide little or no improvement compared with using only features in the first set of image frames.

In some examples, the second feature detection and matching process is performed only on each region in the respective 2D image frame containing one of the one or more objects that satisfy the one or more first predetermined conditions.

By only performing the second feature detection and matching process on relevant regions of the image frames, the second feature detection and matching process takes less time while still providing useful results.

In some examples, the second set of matched features is identified by: performing the second feature detection and matching process on at least the subset of the second set of 2D image frames to identify a plurality of matched features; and including in the second set of matched features any feature in the plurality of matched features that satisfies one or more second predetermined conditions.

The one or more second predetermined conditions may, for example, relate to a speed of the feature and/or a depth of the feature.

In some examples, the first feature detection and matching process comprises applying a non-affine-invariant feature detection algorithm to the first set of 2D image frames; and the second feature detection and matching process comprises applying an affine-invariant feature detection algorithm to at least the subset of the second set of 2D image frames.

The feature detection for the first set of 2D image frames is primarily to detect background features, which have less parallax shift over different views. A non-affine-invariant feature detection algorithm is therefore suitable for processing the first set of 2D image frames, enabling the first set of 2D image frames to be processed efficiently without significantly impacting the results of the feature detection and matching process. For detecting foreground features in the second set of 2D image frames, an affine-invariant algorithm is desirable, as the effect of parallax is larger for foreground features.

In some examples, the method further comprises identifying one or more affine transforms to be applied by the affine-invariant feature detection algorithm.

The one or more affine transforms to be applied may be identified based on any available information limiting the possible poses of the cameras.

In some examples, the method further comprises: obtaining one or more further sets of 2D image frames, wherein, for each further set, each 2D image frame in the further set has been acquired by a respective camera in the multi-camera system at a further, different moment in time; and for each further set of 2D image frames, performing a further feature detection and matching process on at least a subset of the further set of 2D image frames to identify a further set of matched features.

The use of matched features from a greater number of sets of 2D image frames to calibrate the cameras improves a likelihood that the calibration of the cameras will be sufficiently accurate and reliable.

In some examples, the pose for each camera in the multi-camera system is determined by processing the first set of matched features, the second set of matched features and each further set of matched features.

For instance, the number of further sets of 2D image frames may be predetermined.

In some examples, the one or more further sets of 2D image frames are obtained and processed using an iterative process, the iterative process comprising iteratively repeating the steps of: obtaining a further set of 2D image frames of the scene, each 2D image frame in the further set having been acquired by a respective camera in the multi-camera system at a further, different moment in time; performing a further feature detection and matching process on at least a subset of the further set of 2D image frames to identify a further set of matched features; processing the first set of matched features, the second set of matched features and each further set of matched features to determine an updated pose for each camera in the multi-camera system; and determining a further quality metric for the updated poses, until a predetermined stopping condition is met.

In this way, the camera poses are updated by accumulating more features, until the poses are considered to be sufficiently accurate and reliable.

In some examples, the method further comprises determining a first quality metric for the determined poses; and the iterative process is performed in response to the first quality metric failing to exceed a predetermined quality threshold.

In other words, one or more further sets of 2D image frames are obtained and processed to identify additional matched features only if the matched features identified in the first and second sets of 2D image frames fail to provide a calibration having a desired quality.

In some examples, each further quality metric is determined by: using the poses determined in a most-recent iteration to determine a first reprojection error for each of a plurality of pixels in at least one set of image frames; applying a predetermined shift to each pose to determine a shifted pose; using the shifted poses to determine a second reprojection error for each of the plurality of pixels; and determining, for each of the plurality of pixels, a difference between the first reprojection error and the second reprojection error.

In some examples, each further quality metric is determined by determining a difference between the poses determined in a most-recent iteration and the poses determined in a preceding iteration; and the predetermined stopping condition is met when the difference between the poses falls below a predetermined distance threshold.

In some examples, the second feature detection and matching process and each further feature detection and matching process each result in a 3D point cloud of the scene; and the first quality metric and/or each further quality metric are each determined based on the spatial distribution of the 3D point cloud of the scene determined in a most-recent iteration.

For instance, each quality metric may be based on the variance in the z direction (the direction that points away from the camera).

In some examples, each further set of image frames is a set of image frames for which one or more objects detected in at least two image frames in the set satisfy one or more third predetermined conditions.

The one or more third predetermined conditions may, for example, relate to position, known size and/or a size within the 2D image frame (e.g. a size of a bounding box for the object).

In some examples, each further set of matched features is identified by: performing the further feature detection and matching process on at least the subset of the further set of 2D image frames to identify a plurality of matched features; and including in the further set of matched features any feature that satisfies one or more fourth predetermined conditions.

The one or more fourth predetermined conditions may, for example, relate to a speed of the feature and/or a depth of the feature.

There is also provided a computer program product comprising computer program code means which, when executed on a computing device having a processing system, cause the processing system to perform all of the steps of any method described above.

According to examples in accordance with an aspect of the invention, there is provided a processing system for calibration of a multi-camera system, the processing system being configured to: obtain a first set of 2D image frames of a scene, each 2D image frame in the first set having been acquired by a respective camera in the multi-camera system at a first moment in time; perform a first feature detection and matching process on the first set of 2D image frames to identify a first set of matched features; obtain a second set of 2D image frames of the scene, each 2D image frame in the second set having been acquired by a respective camera in the multi-camera system at a second, different moment in time; perform a second feature detection and matching process on at least a subset of the second set of 2D image frames to identify a second set of matched features; and process the first set of matched features and the second set of matched features to determine a pose for each camera in the multi-camera system.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a first example scene in which all features are far from the plurality of cameras;
Fig. 2 illustrates a second example scene in which a feature is closer to the plurality of cameras;
Fig. 3 illustrates a system for multi-camera capture, according to an embodiment of the invention;
Fig. 4 illustrates three sets of 2D image frames of a scene;
Fig. 5 illustrates an iterative process for updating camera poses; and
Fig. 6 illustrates a method for calibration of a multi-camera system, according to an embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method and system for calibration of a multi-camera system. Sets of 2D image frames of a scene are obtained, each set having been acquired by the multi-camera system at a different moment in time, and a feature detection and matching process is performed on each set of 2D image frames to identify a respective set of matched features. A pose is determined for each camera in the multi-camera system using the matched features in each set.

Embodiments are at least partly based on the recognition that, in a dynamic scene, there may be moments in which there are no or very few features sufficiently close to the cameras to provide accurate camera calibration using Structure from Motion. In some situations (e.g. when filming a sports match), this may be the case for a large proportion of the time. If the set of 2D image frames used to perform Structure from Motion was acquired at a time in which there are no or few features close to the cameras, the camera calibration will be unreliable. The inventors have further recognized that cases in which the camera calibration is unreliable due to the distance of the features used for calibration are not currently identified, as the re-projection error is not affected.

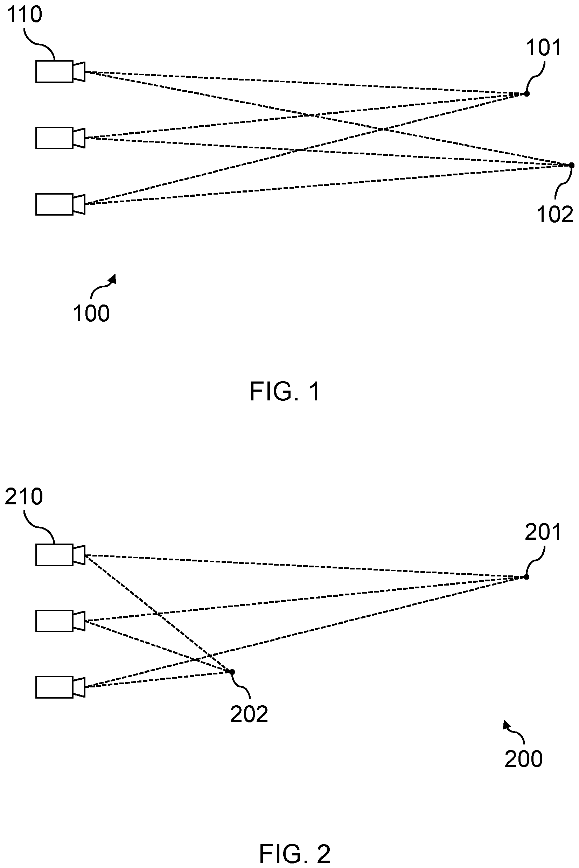

Figs. 1 and 2 illustrate the effect of distance on the reliability of camera calibration. Fig. 1 illustrates a first example scene 100 comprising a plurality of cameras 110, and features 101 and 102. The features 101 and 102 are both a long distance from the plurality of cameras, meaning that the positions and orientations of the cameras are less sensitive to changes in 3D point positions.

Fig. 2 illustrates a second example scene 200 comprising a plurality of cameras 210, and features 201 and 202. Feature 202 is much closer to the plurality of cameras than any of the features in the first example scene 100; this improves the accuracy and reliability of the camera calibration.

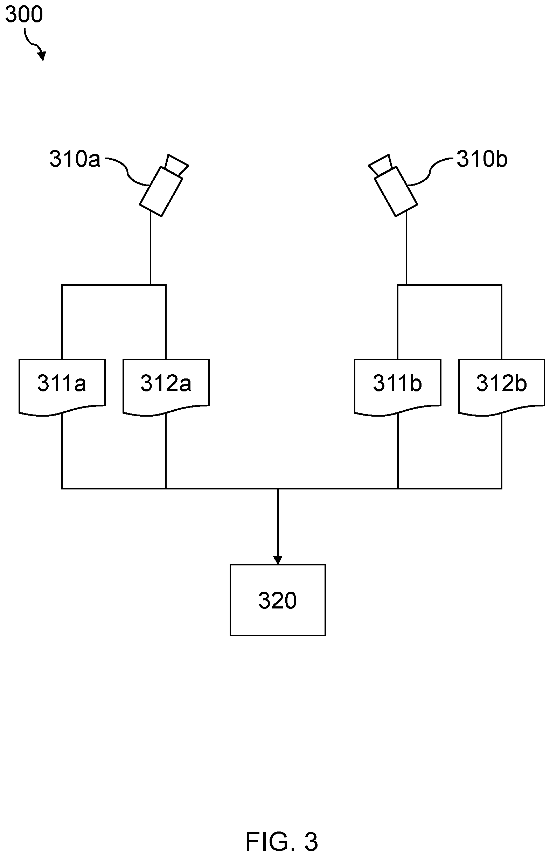

Fig. 3 illustrates a system 300 for multi-camera capture, according to an embodiment of the invention. The system comprises a multi-camera system comprising a plurality of cameras 310a, 310b, and a processing system 320 for calibration of the multi-camera system. The processing system 320 is, itself, an embodiment of the invention.

The multi-camera system illustrated in Fig. 3 has two cameras: a first camera 310a and a second camera 310b; however, it is to be understood that the processing system 320 may be used to calibrate a multi-camera system comprising any number of cameras. The number of cameras in the multi-camera system may depend, for example, on a complexity of the scene and/or on an application of the multi-camera system.

Each camera 310a, 310b in the multi-camera system is configured to acquire 2D image frames of a scene from a different viewpoint (i.e. each of the plurality of cameras has a different position and/or orientation to each other camera). In particular, each camera is configured to acquire at least a first 2D image frame 311a, 311b of the scene at a first moment in time, and a second 2D image frame 312a, 312b of the scene at a second moment in time (which is different to the first moment in time). In this way, a first set of 2D image frames is acquired by the plurality of cameras at the first moment in time, and a second set of 2D image frames is acquired by the plurality of cameras at the first moment in time. In some examples, each camera may be additionally configured to acquire one or more further 2D image frames of the scene. In some examples, the first 2D image frame, second 2D image frame and any further 2D image frames acquired by a camera of the multi-camera system may be part of a video sequence acquired by the camera.

The processing system 320 is configured to obtain the first set of 2D image frames 311a, 311b acquired at the first moment in time and the second set of 2D image frames 312a, 312b acquired at the second moment in time. In Fig. 3, the processing system directly obtains the first and second sets of 2D image frames from the cameras 310a, 310b that acquired the image frames; however, as the skilled person will readily appreciate, the processing system may alternatively obtain the first and second sets of 2D image frames from another source storing the sets of 2D image frames (e.g. a memory unit).

In some examples, the processing system 320 may obtain each set of 2D image frames as the set of 2D image frames is acquired by the plurality of cameras; in other words, the processing system may be configured to obtain and process each set of 2D image frames in real-time or close to real-time.

Having obtained the first set of 2D image frames 311a, 311b, the processing system 320 is configured to perform a first feature detection and matching process on the first set of 2D image frames to identify a first set of matched features. The features detected in the first feature detection and matching process may, for example, comprise any points in the first set of 2D image frames for which it is possible to identify any corresponding points in other 2D image frames in the first set (such as corner points). Detected features may then be matched with any identified corresponding points in other 2D image frames in the first set to identify the first set of matched features.

The first feature detection and matching process may comprise any suitable feature detection and matching technique(s). For instance, the first feature detection and matching process may comprise applying a scale-invariant feature transform (SIFT) algorithm to the first set of 2D image frames. The first feature detection and matching process may be performed on an entirety of each 2D image frame in the first set, in order to detect and match all available features.

In some examples, the first feature detection and matching process may comprise applying a non-affine-invariant feature detection algorithm (such as a conventional SIFT algorithm) to the first set of 2D image frames. A non-affine-invariant feature detection algorithm may be any feature detection algorithm that is not invariant to all parameters of an affine transform; for example, a conventional SIFT algorithm is scale-invariant, but is not invariant to changes to the camera latitude or longitude angles. The use of a non-affine-invariant feature detection algorithm enables the first set of matched features to be identified more efficiently. It may be expected that the first set of matched features includes at least some more distant features (e.g. features belonging to a background of the scene rather than to a foreground object); the effect of parallax is much smaller for distant features, meaning that a non-affine-invariant feature detection algorithm provides similar results to a more computationally intensive affine-invariant feature detection algorithm.

Having obtained the second set of 2D image frames 312a, 312b, the processing system 320 is configured to perform a second feature detection and matching process on at least a subset of the second set of 2D image frames to identify a second set of matched features. The second feature detection and matching process may comprise any suitable feature detection and matching technique(s) (e.g. a SIFT algorithm). In some examples, the second feature detection and matching process may comprise applying an affine-invariant feature detection algorithm to at least the subset of the second set of 2D image frames. This enables features close to the multi-camera system, which are more effected by parallax, to be matched more accurately. The affine-invariant feature detection algorithm may, for example, be an affine-invariant SIFT algorithm, such as the Affine-SIFT algorithm described in Yu and Morel (2011), "ASIFT: An Algorithm for Fully Affine Invariant Comparison", Image Processing On Line, 1:11-38, https://doi.org/10.5201/ipol.2011.my-asift.

An affine-invariant feature detection algorithm applies a number of affine transforms to each 2D image frame on which the second feature detection and matching process is being performed, thereby producing a plurality of sets of transformed 2D image frames, each set of transformed 2D image frames having been produced by applying a respective affine transform. Feature detection and matching is then performed on the plurality of sets of transformed 2D image frames; a filtering step may then be performed so that the second set of matched features only includes matches that are compatible with an epipolar geometry.

In some examples, the affine-invariant feature detection algorithm may not necessarily be fully invariant; rather, the affine-invariant feature detection algorithm may be invariant over a particular range of longitude and latitude. One or more affine transforms to be applied by the affine-invariant feature detection algorithm may be identified based on any available information that limits the possible relative poses of the plurality of cameras 310a, 310b. For example, if it is known that the plurality of cameras 310a, 310b are horizontally aligned with one another (i.e. with the optical axes of the cameras lying on or close to a same horizontal plane), the identified affine transforms to be applied by the affine-invariant feature detection algorithm may include affine transforms that approximate a rotation about the y-axis (i.e. the vertical axis), but do not include affine transforms having rotation about the x-axis or z-axis.

The information limiting the possible relative poses of the plurality of cameras may be obtained using any suitable techniques. For instance, the first set of matched features may be processed to determine an initial pose for each camera, and the affine transform(s) to be applied may be identified based on the initial pose for each camera. In some examples, where the first set of matched features includes foreground features, the affine transform(s) to be applied may be identified based on the foreground features in the first set of matched features (e.g. based on an approximate 3D position and/or an approximate depth value of the foreground features). Whether the first set of matched features includes foreground features may be identified by determining a depth for each feature in the first set, or by performing object detection on the first set of 2D image frames and identifying any foreground objects based on the size of the object in the 2D image frame(s) in which the object appears and a known or estimated real size of the object. In some examples, the processing system may obtain information regarding a range of possible relative movement and/or a range of possible relative rotation of the cameras in the multi-camera system (for example, where the multi-camera system is a multi-camera rig in which the cameras are mounted on a shared supporting structure), and the affine transform(s) to be applied may be identified based on this information. The information regarding the range of possible relative movement and/or the range of possible relative rotation may be obtained, for instance, via user-input. In some examples, information relating to geometry of the scene may be used to identify the affine transform(s) to be applied; for instance, where the scene is a sports pitch, a known size of the sports pitch and the approximate camera locations may be used to identify the affine transform(s) to be applied.

In some examples, the second set of 2D image frames may be a set of 2D image frames that is identified as likely to contain features that would, in combination with the first set of matched features, result in improved camera calibration, compared with using the first set of matched features alone. In other words, the processing system 320 may be configured to obtain, in addition to the first set of 2D image frames, a plurality of sets of 2D image frames acquired by the multi-camera system, and to perform the second feature detection and matching process only on a set of 2D image frames satisfying one or more predetermined conditions.

For instance, where each camera in the multi-camera system acquires a video sequence of the scene, the processing system 320 may be configured to obtain each 2D image frame in each video sequence, with the 2D image frames acquired by the plurality of cameras at any single moment in time forming a respective set of 2D image frames. One set of 2D image frames may be identified as the first set of 2D image frames, and the first feature detection and matching process may be performed as described above; the processing system may then be configured to process other sets of 2D image frames to identify, as the second set of 2D image frames, a suitable set of 2D image frames for performing the second feature detection and matching process. In some examples (e.g. where the processing system is processing the sets of 2D image frames in real-time or near real-time), the processing system may process, in chronological order, each set of 2D image frames acquired after the first set of 2D images until the second set of 2D image frames is identified.

In some examples, processing sets of 2D image frames to identify the second set of 2D image frames may comprise performing object detection on each of the sets of 2D frames to detect any objects in the set of 2D image frames. The second set of 2D image frames may then be a set of 2D image frames for which one or more objects detected in at least two image frames in the set satisfy one or more first predetermined conditions. In some examples, object detection may additionally be performed on the first set of 2D image frames, and, for any object that is detected in both the first set of 2D image frames and the second set of 2D image frames, the one or more first predetermined conditions may include one or more conditions relating to a difference between the object in the first set of 2D image frames and the object in the second set of 2D image frames. Object detection may be performed more efficiently than feature detection and matching; thus, performing object detection on each set of 2D image frames and performing the second feature detection and matching process only on a set of 2D image frames containing at least one object satisfying the one or more first predetermined conditions enables a suitable second set of matched features to be identified more efficiently than performing a feature detection and matching process on every set of 2D image frames.

The one or more first predetermined conditions may include a condition relating to a size of the object (e.g. a size of the object within the 2D image frame(s) and/or a known or estimated real size of the object). For instance, the one or more first predetermined conditions may include a condition that the object has at least a predetermined minimum size within at least one of the 2D image frames in which the object is detected. The predetermined minimum size may be specific to a particular type of object (in order to account for differences in typical real sizes of objects); for example, if the scene is a sports pitch, a sports player may have a larger predetermined minimum size than a ball. The one or more first predetermined conditions may additionally or alternatively include a condition that the object has at least a predetermined minimum real size (where the real size of the object is known or estimated based on the type of object). In examples in which object detection is additionally performed on the first set of 2D image frames, for any object that is detected in both sets, the one or more first predetermined conditions may include a condition that the object has a larger size in at least one 2D image frame in the second set than any 2D image frames in which the object is detected in the first set (as this indicates that the object is closer to at least one of cameras in the multi-camera system than at the first moment in time).

The one or more first predetermined conditions may additionally or alternatively include a condition relating to a position of the object within the 2D image frame(s). For instance, the one or more first predetermined conditions may include a condition that the object is at least a predetermined minimum distance within at least one 2D image frame in the second set from any features in the first set of matched features found in the 2D image in the first set acquired by the same camera. In examples in which object detection is additionally performed on the first set of 2D image frames, for any object that is detected in both sets, the one or more first predetermined conditions may include a condition that the object is at least a predetermined distance within at least one 2D image frame in the second set from the position of the same object in the 2D image in the first set acquired by the same camera. In some examples, the one or more first predetermined conditions may include a condition that the object is within a predetermined distance of the base of the 2D image frame (e.g. that the object is within the bottom half of the 2D image frame). An object closer to a camera typically has a lower position in an image frame acquired by the camera, so an object within a predetermined distance of the base of the 2D image frame is more likely to be closer to the camera. In examples in which the second set of 2D images is a set of 2D image frames for which one or more objects detected in at least two image frames in the set satisfy one or more first predetermined conditions, the second feature detection and matching process may be performed only on 2D image frames in the second set for which one or more objects detected in the 2D image frame satisfy the one or more conditions. In other words, the processing system 320 may be configured to identify a subset of 2D image frames in the second set, where the subset consists of 2D image frames containing one or more objects that satisfy the one or more conditions, and to perform the second feature detection and matching process only on the subset of 2D image frames. This reduces the computational impact of the second feature detection and matching process; this may be particularly desirable in examples in which an affine-invariant feature detection algorithm, which is more computationally intensive, is used in the second feature detection and matching process.

In some examples, the second feature detection and matching process may be performed only on each region in the respective 2D image frame containing one of the one or more objects that satisfy the one or more first predetermined conditions. Each region containing one of the one or more objects that satisfy the one or more first predetermined conditions may, for example, be defined by a bounding box or another bounding shape output by the object detection algorithm. This further reduces the computational impact of the second feature detection and matching process, particularly where an affine-invariant feature detection algorithm is used in the second feature detection and matching process.

In some examples, the second set of matched features includes only features that satisfy one or more second predetermined conditions. In other words, the processing system 320 may be configured to perform the second feature detection and matching process on at least a subset of the second set of 2D image frames 312a, 312b to identify a plurality of matched features, and to include in the second set of matched features any feature of the plurality of matched features that satisfies one or more second predetermined conditions. In this way, any matched features in the second set of 2D image frames that are identified as being unlikely to improve (or unlikely to significantly improve) the accuracy of camera calibration are not included in the second set of matched features.

The one or more second predetermined conditions may, for example, include a condition relating to depth. For instance, the one or more second predetermined conditions may include a condition that the feature has a depth of no more than a predetermined maximum depth. In this way, only foreground features are included in the second set of matched features, increasing a proportion of the features used for camera calibration that are closer to the cameras and thereby improving an accuracy of the camera calibration. In some examples, the one or more second predetermined conditions may include a condition that the position of the feature within the 2D image frame is at least a predetermined distance from any feature included in the first set of matched features (i.e. from a position of the feature within the 2D image frame in the first set acquired by the same camera). If any features in the plurality of matched features correspond to a feature in the first set of matched features, the one or more second predetermined conditions for each feature that corresponds to a feature in the first set may include a condition that the position of the feature within the 2D image frame is at least a predetermined distance from the position of the corresponding feature at the first moment in time, and/or a condition that a speed of the feature exceeds a predetermined speed threshold. The speed of the feature may be determined based on the difference between the position of the feature and the position of the corresponding feature at the first moment in time, and the length of time between the first moment in time and the second moment in time. Background features are typically stationary; thus, movement of a feature may indicate that the feature is close to the cameras of the multi-camera system. In some examples, the one or more second predetermined conditions may include a condition that the feature is within a predetermined distance of the base of the 2D image frame.

Having identified the first and second sets of matched features, the processing system 320 is configured to process the first set of matched features and the second set of matched features to determine a pose for each camera 310a, 310b in the multi-camera system. In other words, the determination of the pose of each camera is based on an aggregate set of matched features from both the first set of 2D image frames and the second set of 2D image frames.

In some examples, the processing system 320 may be configured to obtain one or more further sets of 2D image frames, each further set having been acquired by the plurality of cameras 310a, 310b at a respective further moment in time, and to perform, for each further set of 2D image frames, a further feature detection and matching process on at a subset of the further set of 2D image frames to identify a respective further set of matched features. The pose of each camera may then be determined based on an aggregate set of matched features comprising the first set of matched features, the second set of matched features and each further set of matched features. The number of further sets of 2D image frames on which a further feature detection and matching process is performed may be predetermined, or an iterative process of updating the camera poses may be performed until a desired degree of accuracy is reached, as described in more detail below.

As described above with respect to the second set of 2D image frames, each further set of 2D image frames may be a set of 2D image frames for which one or more objects detected in at least two image frames in the set satisfy one or more predetermined conditions. For instance, the processing system 320 may be configured to obtain each set of 2D image frames acquired by the multi-camera system after the second set of 2D image frames, and to perform object detection on each set of 2D image frames. The processing system may then only perform the further feature detection and matching process on the set of 2D image frames in response to one or more objects detected in at least two image frames in the set satisfying the one or more predetermined conditions. The one or more predetermined conditions may include any of the first predetermined conditions described above, or any other suitable conditions for identifying sets of 2D image frames that are likely to contain features which would improve the accuracy and reliability of camera calibration. As described above with respect to the second feature detection and matching process, each further feature detection and matching process may be performed only on the 2D image frames in the respective further set that contain one or more objects satisfying the one or more predetermined conditions (e.g. only on each region containing one of the one or more objects). The processing system may continue to process sets of 2D image frames acquired by the multi-camera system in this way until a predetermined number of further sets of matched features have been identified, or until a predetermined stopping condition is met, as desired.

As described above with respect to the second set of matched features, each further set of matched features may include only features that satisfy one or more predetermined conditions (which may, for example, include any of the second predetermined conditions described above, or any other suitable conditions for identifying features that are likely to improve the accuracy and reliability of camera calibration). In other words, each further set of matched features may be identified by performing the further feature detection and matching process on at least the subset of the further set of 2D image frames to identify a plurality of matched features, and including in the further set of matched features any feature that satisfies the one or more predetermined conditions.

Each further feature detection and matching process may comprise any suitable feature detection and matching technique(s). In some examples, each further feature detection and matching process may comprise applying an affine-invariant feature detection algorithm (e.g. affine-invariant SIFT algorithm) to at least a subset of the respective further set of 2D image frames. As described above with respect to the second feature detection and matching process, one or more affine transforms to be applied by the affine-invariant feature detection algorithm may be defined using any available information that limits the possible relative poses of the plurality of cameras. For each further feature detection and matching process, this information may include any previously determined poses for the cameras in the multi-camera set and/or matched features identified in any previous feature detection and matching process.

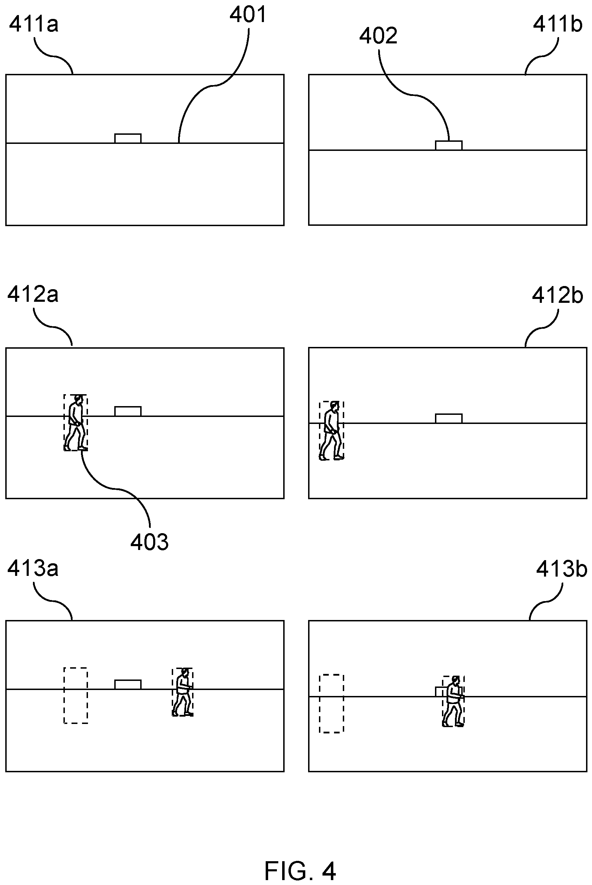

Using matched features from one or more further moments in time to determine the camera poses typically means that a greater number of matched features close to the cameras are used to determine the camera poses, thereby further improving the accuracy of the determined poses. This concept is further illustrated by Fig. 4, which illustrates three sets of 2D image frames of a scene, each set of 2D image frames having been acquired by a multi-camera system at a different moment in time.

The scene captured by the sets of 2D image frames in Fig. 4 contains a sports pitch 401 with a goalpost 402. In the first set of 2D image frames 411a, 411b, only the edge of the sports pitch and the goalpost are visible; thus, any features detected in the first set of 2D images will be far from the cameras used to acquire the first set of images. Using only features detected in the first set of 2D images 411a, 411b for camera calibration would provide unreliable results.

In the second set of 2D image frames 412a, 412b, a sports player 403 is visible in addition to the edge of the sports pitch and the goalpost. A bounding box illustrates a region identified by an object detection algorithm as containing the sports player in each 2D image frame in the second set. The presence of the sports player in the 2D image frames 412a, 412b provides some matched foreground features (i.e. matched features that are close to the cameras that acquired the images). Thus, using matched features identified in the second set of 2D image frames in addition to matched features identified in the first set of 2D image frames for camera calibration provides more accurate and reliable results than using only matched features identified in the first set of 2D image frames.

In the third set of 2D image frames 413a, 413b, the sports player 403 is still visible, but the position of the sports player has changed compared to the second set of 2D image frames (due to movement of the sports player). The empty bounding box in each 2D image frame in the third set illustrates the position of the sports player in the 2D image frame in the second set acquired by the same camera. This change in position of the sports player provides foreground features in a different position to the foreground features in the second set of 2D image frames. Using matched features identified in the third set of 2D image frames for camera calibration in addition to matched features identified in the first and second sets of 2D image frames therefore further improves the accuracy and reliability of the camera calibration.

In some examples, the processing system 320 may be configured to perform an iterative process of updating the camera poses until a predetermined stopping criteria is met. In some examples, the iterative process may be performed only if it is determined that the poses for the cameras determined using the first and second sets of matched features do not meet a desired level of accuracy. For instance, a first quality metric may be determined for the determined poses; in response to the first quality metric exceeding a predetermined quality threshold, the camera calibration may be complete, while in response to the first quality metric failing to exceed the predetermined quality threshold, the processing system may be configured to perform the iterative process of updating the camera poses until the predetermined stopping criteria is met. The value of the predetermined quality threshold may depend on a desired level of accuracy and on the type of quality metric used for the first quality metric. Suitable quality metrics are described in more detail below.

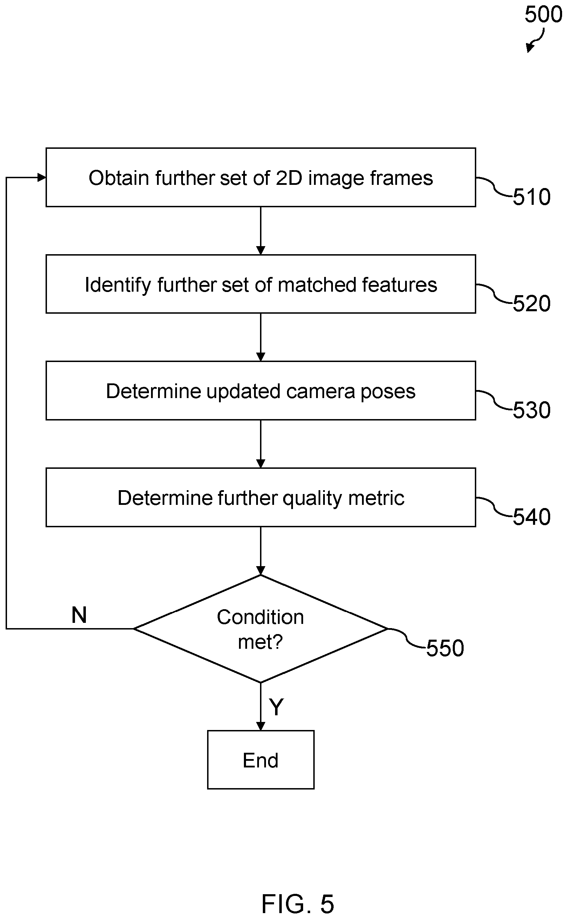

An example of an iterative process 500 of updating the camera poses is illustrated in Fig. 5. At step 510, a further set of 2D image frames of the scene is obtained. Each 2D image frame in the further set has been acquired by a respective camera in the multi-camera system at a further, different moment in time.

At step 520, a further feature detection and matching process is performed on at least a subset of the further set of 2D image frames to identify a further set of matched features.

At step 530, the first set of matched features, the second set of matched features and each further set of matched features are processed to determine an updated pose for each camera in the multi-camera system.

At step 540, a further quality metric is determined for the updated poses.

At step 550, it is determined whether a predetermined stopping condition relating to the further quality metric has been met. In response to meeting the predetermined stopping condition, the iterative process ends. In response to failing to meet the predetermined stopping condition, steps 510 to 550 are repeated until the predetermined condition is met.

Any suitable quality metric may be used for the first quality metric and/or each further quality metric. In examples in which a first quality metric is used to determine whether to carry out the iterative process, the same quality metric may be used for the first quality metric and each further quality metric, or the first quality metric may be a different quality metric to each further quality metric (e.g. where the type of metric used for each further quality metric requires information that is not available, or not necessarily available, at the time of determining the first quality metric).

In some examples, the first quality metric and/or each further quality metric may be a quality metric based on how reprojection errors respond to (small) modifications in the camera positions. For instance, the first quality metric and/or each further quality metric may be determined by using the poses determined most recently (i.e. the poses determined using the first and second sets of matched features for the first quality metric or the poses determined in a most-recent iteration of the iterative process for the further quality metric) to determine a first reprojection error for each of a plurality of pixels in at least one set of image frames (i.e. at least one of: the first set of image frames, the second set of image frames and/or at least one further set of image frames). The plurality of pixels may correspond to the positions of matched features. In some examples, the first reprojection error may be determined for each feature used to determine the most recently determined camera poses (i.e. the first reprojection error may be determined for each of a plurality of pixels in each set of image frames in which a set of matched features has been identified). A predetermined shift may then be applied to each pose to determine a shifted pose, where the predetermined shift applied is a translation in a direction orthogonal to an optical axis of the camera to which the predetermined shift is applied (i.e. a direction parallel to an image plane of the camera), and a second reprojection error may be determined for each of the plurality of pixels using the shifted poses. The size of the predetermined shift may depend on the distance(s) between the cameras and a desired accuracy of the camera calibration. For example, for a multi-camera system in which the cameras are positioned at a distance of a few meters (e.g. 3 m) from one another and are calibrated with an accuracy of up to 1 cm, the predetermined shift may comprise a translation of a few centimeters (e.g. 5-10 cm).

A difference between the first reprojection error and the second reprojection error may be determined for each of the plurality of pixels, and a quality metric may be determined based on the differences between the first reprojection error and the second reprojection error. For instance, the quality metric may be an average difference between the first reprojection error and the second reprojection error.

A higher sensitivity to changes in camera positions indicates a higher quality calibration. Thus, in examples in which each further quality metric is based on the differences between the first reprojection error and the second reprojection error, the predetermined stopping condition may be a condition that the further quality metric exceeds a predetermined quality threshold. In other words, the processing system 320 may be configured to iteratively repeat steps 510 to 550 until the further quality metric exceeds the predetermined quality threshold. The predetermined quality threshold may, for example, depend on one or more of: the number of matched features used to determine the poses of the cameras, a distance of a closest object to be rendered, a focal length of each camera and/or a distance between the cameras.

In some examples, each further quality metric may be based on a difference between the poses determined in a most-recent iteration and the poses determined in a preceding iteration. The predetermined stopping condition may then be a condition that the difference between the poses determined in a most-recent iteration and the poses determined in a preceding iteration is below a predetermined difference threshold. In other words, processing system 320 may be configured to iteratively repeat steps 510 to 550 until a stable result is achieved. The predetermined difference threshold may depend on the distance between the cameras and/or on an application of multi-camera system. For instance, where the cameras are positioned at a distance of a few meters (e.g. 3 m) from one another and the scene is a sports pitch, the predetermined difference threshold may have a value of 1-3 cm.

In some examples in which the second feature detection and matching process and/or each further feature detection and matching process result in a 3D point cloud of the scene, the first quality metric and/or each further quality metric may be a quality metric based on a most recently determined 3D point cloud of the scene (i.e. a 3D point cloud resulting from the second feature detection and matching process for the first quality metric or a 3D point cloud resulting from a most recent further feature detection and matching process for each further quality metric). For example, the first quality metric and/or each further quality metric may be a variance in a z (depth) direction. The presence of features over a wider range of depths is indicative of a higher quality calibration; thus, the predetermined stopping condition may be a condition that the variance in the z direction exceeds a predetermined variance threshold. In some examples, the quality metric may additionally or alternatively be based on a variance in an x direction and/or a variance in a y direction (where the x and y directions are perpendicular to one another and to the z direction).

In some examples, the first quality metric and/or each further quality metric may be based on a number of matched features used to determine the poses of the cameras that satisfy one or more requirements. The one or more requirements may relate to a size and/or distance of the features; for instance, first quality metric and/or each further quality metric may be based on the number of matched features that belong to an object having at least a minimum size in at least one 2D image frame and/or that have a depth value below a predetermined depth threshold.

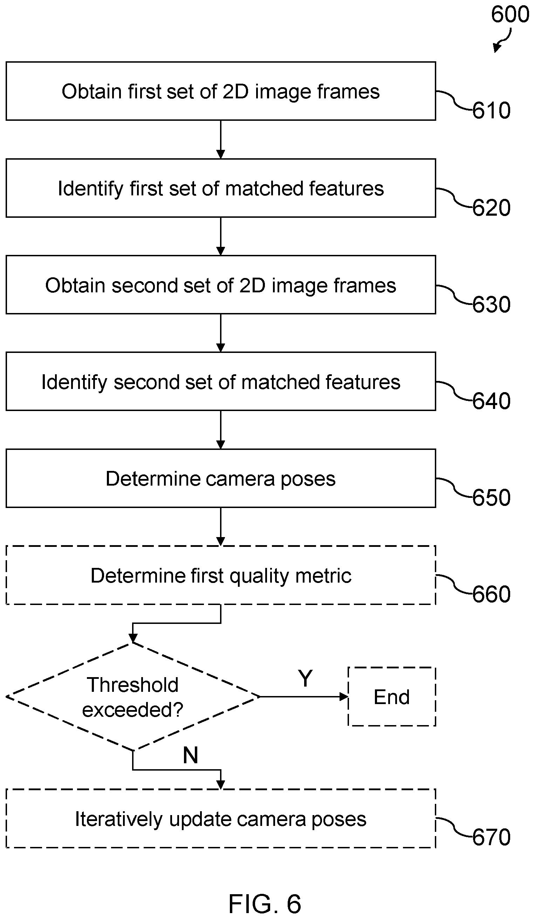

Fig. 6 illustrates a method 600 for calibration of a multi-camera system, according to an embodiment of the invention.

The method beings at step 610, at which a first set of 2D image frames of a scene is obtained. Each 2D image frame in the first set has been acquired by a respective camera in the multi-camera system at a first moment in time.

At step 620, a first feature detection and matching process is performed on the first set of 2D image frames to identify a first set of matched features.

At step 630, a second set of 2D image frames of the scene is obtained. Each 2D image frame in the second set has been acquired by a respective camera in the multi-camera system at a second, different moment in time.

At step 640, a second feature detection and matching process is performed on at least a subset of the second set of 2D image frames to identify a second set of matched features.

At step 650, the first set of matched features and the second set of matched features are processed to determine a pose for each camera in the multi-camera system.

In some examples, the method 600 may further comprise a step 660 of determining a first quality metric for the determined poses.

In response to the first quality metric exceeding a predetermined quality threshold, the camera calibration is complete.

In response to the first quality metric failing to exceed the predetermined quality threshold, the method may perform an iterative process 670 of updating the camera poses until a predetermined condition is met. The iterative process 670 may correspond to the iterative process 500 described above with reference to Fig. 5.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method (600) for calibration of a multi-camera system comprising a plurality of cameras, the method comprising:
obtaining a first set of 2D image frames (311a, 311b, 411a, 411b) of a scene, each 2D image frame in the first set having been acquired by a respective camera (310a, 310b) in the multi-camera system at a first moment in time;
performing a first feature detection and matching process on the first set of 2D image frames to identify a first set of matched features;
obtaining a second set of 2D image frames (312a, 312b, 412a, 412b) of the scene, each 2D image frame in the second set having been acquired by a respective camera in the multi-camera system at a second, different moment in time;
performing a second feature detection and matching process on at least a subset of the second set of 2D image frames to identify a second set of matched features; and
processing the first set of matched features and the second set of matched features to determine a pose for each camera in the multi-camera system.

2. The method (600) of claim 1, wherein the second set of 2D image frames (312a, 312b, 412a, 412b) is a set of 2D image frames for which one or more objects detected in at least two image frames in the set satisfy one or more first predetermined conditions.

3. The method (600) of claim 2, wherein the second feature detection and matching process is performed only on 2D image frames in the second set (312a, 312b, 412a, 412b) for which one or more objects detected in the 2D image frame satisfy the one or more first predetermined conditions.

4. The method of claim 3, wherein the second feature detection and matching process is performed only on each region in the respective 2D image frame containing one of the one or more objects that satisfy the one or more first predetermined conditions.

5. The method (600) of any of claims 1 to 4, wherein the second set of matched features is identified by:
performing the second feature detection and matching process on at least the subset of the second set of 2D image frames (312a, 312b, 412a, 412b) to identify a plurality of matched features; and
including in the second set of matched features any feature in the plurality of matched features that satisfies one or more second predetermined conditions.

6. The method (600) of any of claims 1 to 5, wherein:
the first feature detection and matching process comprises applying a non-affine-invariant feature detection algorithm to the first set of 2D image frames (311a, 311b, 411a, 411b); and
the second feature detection and matching process comprises applying an affine-invariant feature detection algorithm to at least the subset of the second set of 2D image frames (312a, 312b, 412a, 412b).

7. The method (600) of claim 6, wherein the method further comprises identifying one or more affine transforms to be applied by the affine-invariant feature detection algorithm.

8. The method (600) of any of claims 1 to 7, wherein the method further comprises:
obtaining one or more further sets of 2D image frames (413a, 413b), wherein, for each further set, each 2D image frame in the further set has been acquired by a respective camera (310a, 310b) in the multi-camera system at a further, different moment in time; and
for each further set of 2D image frames, performing a further feature detection and matching process on at least a subset of the further set of 2D image frames to identify a further set of matched features.

9. The method (600) of claim 8, wherein the pose for each camera (310a, 310b) in the multi-camera system is determined by processing the first set of matched features, the second set of matched features and each further set of matched features.

10. The method (600) of claim 8, wherein the one or more further sets of 2D image frames are obtained and processed using an iterative process (500), the iterative process comprising iteratively repeating the steps of:
obtaining a further set of 2D image frames (413a, 413b) of the scene, each 2D image frame in the further set having been acquired by a respective camera (310a, 310b) in the multi-camera system at a further, different moment in time;
performing a further feature detection and matching process on at least a subset of the further set of 2D image frames to identify a further set of matched features;
processing the first set of matched features, the second set of matched features and each further set of matched features to determine an updated pose for each camera in the multi-camera system; and
determining a further quality metric for the updated poses, until a predetermined stopping condition is met.

11. The method (600) of claim 10, wherein:
the method further comprises determining a first quality metric for the determined poses; and
the iterative process (500) is performed in response to the first quality metric failing to exceed a predetermined quality threshold.

12. The method (600) of claim 10 or 11, wherein each further quality metric is determined by:
using the poses determined in a most-recent iteration to determine a first reprojection error for each of a plurality of pixels in at least one set of 2D image frames (311a, 311b, 312a, 312b, 411a, 411b, 412a, 412b, 413a, 413b);
applying a predetermined shift to each pose to determine a shifted pose;
using the shifted poses to determine a second reprojection error for each of the plurality of pixels; and
determining, for each of the plurality of pixels, a difference between the first reprojection error and the second reprojection error.

13. The method (600) of claim 10 or 11, wherein:
each further quality metric is determined by determining a difference between the poses determined in a most-recent iteration and the poses determined in a preceding iteration; and
the predetermined stopping condition is met when the difference between the poses falls below a predetermined distance threshold.

14. A computer program product comprising computer program code means which, when executed on a computing device having a processing system, cause the processing system to perform all of the steps of the method (600) according to any one of claims 1 to 13.

15. A processing system (320) for calibration of a multi-camera system, the processing system being configured to:
obtain a first set of 2D image frames (311a, 311b, 411a, 411b) of a scene, each 2D image frame in the first set having been acquired by a respective camera (310a, 310b) in the multi-camera system at a first moment in time;
perform a first feature detection and matching process on the first set of 2D image frames to identify a first set of matched features;
obtain a second set of 2D image frames (312a, 312b, 412a, 412b) of the scene, each 2D image frame in the second set having been acquired by a respective camera in the multi-camera system at a second, different moment in time;
perform a second feature detection and matching process on at least a subset of the second set of 2D image frames to identify a second set of matched features; and
process the first set of matched features and the second set of matched features to determine a pose for each camera in the multi-camera system.
